Europäisches Patentamt

European Patent Office

Office européen des brevets

(19)

(11) Numéro de publication: C 001 958
A1

(12) DEMANDE DE BREVET EUROPEEN

(21) Numéro de dépôt: 78400165.3

(22) Date de dépôt: 08.11.78

(51) Int. Cl.²: C 03 C 5/00
G 03 B 37/00

(30) Priorité: 09.11.77 FR 7733702

(43) Date de publication de la demande:
16.05.79 Bulletin 79/10

(84) Etats contractants désignés:
BE CH DE GB LU NL SE

(71) Demandeur: Fabiani, Henri
39, Avenue du Général Leclerc
F-92100 Boulogne(FR)

(84) Etats contractants désignés:
BE CH DE GB LU NL SE

(71) Demandeur: Bret, Alain
108, rue de Garches
F-92210 Saint-Cloud(FR)

(84) Etats contractants désignés:
BE CH DE GB LU NL SE

(72) Inventeur: Fabiani, Henri
39, Avenue du Général Leclerc
F-92100 Boulogne(FR)

(72) Inventeur: Bret, Alain
108, rue de Garches
F-92210 Saint-Cloud(FR)

(74) Mandataire: Biétry, Robert et al,
OFFICE BLéTRY 2, Boulevard de Strasbourg
F-75010 Paris(FR)

(54) Procédé et appareillage pour réaliser un fondu enchaîné latéral entre deux ou plusieurs images sur une longueur d'un support photosensible.

(57) Procédé et appareillage pour réaliser un fondu enchaîné latéral entre deux, ou plusieurs images sur une longueur d'un support photosensible.

La présente invention a pour objet la réalisation d'un fondu entre deux, ou plusieurs images a, b, c, se développant sur la longueur (OO-X) d'un support photosensible continu.

L'invention permet notamment de faire apparaître, sur un support ininterrompu, la continuité d'un objet reproduit sur une longueur indéfinie de ce support.

./.

Fig. 2

0001958

## Support photosensible continu présentant un fondu enchaîné spatial, application, procédé d'obtention et dispositif pour la mise en oeuvre du procédé.

La présente invention se situe dans le domaine général de l'enregistrement photographique et concerne notamment un support photosensible continu dont une première et une seconde plages ont été successivement et respectivement exposées, en vue de subir une impression, à l'action d'une première et d'une seconde images lumineuses primaires, ces première et seconde images lumineuses étant respectivement porteuses, par l'intermédiaire de leur répartition spatiale de luminosité, d'un premier et d'un second ensemble d'éléments sémantiques reproduits sur le support par impression.

L'ensemble des éléments sémantiques d'une image étant défini comme celui des éléments discernables représentés par cette image, on sait actuellement, dans le domaine de la reproduction d'images, superposer deux ensembles d'éléments sémantiques différents par voie de surimpression totale ou passer de l'un à l'autre par fondu.

La superposition de deux ensembles d'éléments sémantiques différents peut être réalisée, sur une plage d'un support photosensible, de façon relativement aisée, simplement en impressionnant une même plage de ce support successivement par une première et par une seconde images lumineuses.

Par contre, le passage en fondu d'un ensemble d'éléments sémantiques à un autre ne peut, dans l'état

actuel de la technique, être réalisé directement sur un support photosensible. Plus précisément, l'obtention d'un effet de fondu entre deux images nécessite actuellement le recours à une projection d'images, le fondu apparaissant uniquement entre deux images lumineuses projetées successivement sur un écran et ne se développant ainsi que dans le temps.

Il est connu par exemple de réaliser un fondu enchaîné entre deux images fixes résultant de la projection, sur un écran et au moyen de deux projecteurs, de deux diapositives. Le fondu est obtenu par une extinction progressive du premier projecteur et une augmentation synchronisée et complémentaire de la puissance du second projecteur.

Il est également connu de réaliser des fondus enchaînés en technique cinématographique, en superposant, sur chacun d'un certain nombre de photogrammes, deux images impressionnant la pellicule de façon différente, avec une intensité respectivement décroissante et croissante. L'effet de fondu n'apparaît qu'à la projection et résulte du caractère successif de cette projection pour l'ensemble des photogrammes.

Dans ce contexte, la présente invention a pour but l'obtention d'un fondu entre deux ensembles d'éléments sémantiques sur le support photosensible continu lui-même, c'est-à-dire l'obtention d'un fondu se développant dans l'espace.

Ainsi, un support photosensible impressionné conformément à l'invention est caractérisé en ce que les première et seconde plages précédemment évoquées se chevauchent sur une zone de transition ayant subi l'action successive d'une première partie de chacune des première et seconde images lumineuses primaires, cette zone étant intermédiaire entre une première et une seconde portions de surface ayant respective-

0001958

ment subi l'action d'une seconde partie de la première et d'une seconde partie de la seconde images lumineuses, et en ce que, dans cette zone, l'impression des éléments sémantiques provenant de chacune des images lumineuses s'estompe lorsqu'on se déplace de la portion de surface impressionnée par la seconde partie de cette image, vers l'autre portion de surface.

Si les éléments sémantiques provenant de l'impression de la zone de transition par la première partie de la première image lumineuse sont identiques à ceux qui proviennent de l'impression de cette zone par la première partie de la seconde image lumineuse, l'impression du support photosensible présente alors une continuité sémantique le long des deux portions de surface évoquées et de leur zone de transition.

Le procédé de la présente invention comprend les phases consistant à former les première et seconde images lumineuses primaires par projection, sur un écran, de deux faisceaux lumineux porteurs respectivement du premier et du second ensemble d'éléments sémantiques, ces images lumineuses se chevauchant sur l'écran dans une zone de superposition de luminosité, à

- diminuer la luminosité de chacune des images lumineuses primaires dans la zone de superposition, par interposition de volets sur le trajet des deux faisceaux lumineux jusqu'à obtenir, sur l'écran, un fondu des deux images lumineuses primaires dans la zone de superposition de luminosité, à

- couper le second faisceau lumineux et disposer sur un même axe un appareil de prise de vues chargé dudit support photosensible et la première image lumineuse primaire, à

- prendre une photographie de cette première image au moyen de cet appareil et de ce support, à

- rétablir le second faisceau lumineux et couper

0001958

le premier faisceau, à

- amener sur un même axe l'appareil de prise de vues et la seconde image lumineuse primaire par déplacement relatif, et déplacer le support photosensible, à l'intérieur de l'appareil de prise de vues, d'une longueur liée audit déplacement relatif par une relation prédéterminée, et à

- prendre une photographie de la seconde image lumineuse au moyen de cet appareil et de ce support.

Ainsi, en dépit du fait que cela était toujours apparu impossible, le procédé de l'invention permet de reproduire, à partir de clichés séparés et sur un support photosensible de longueur quelconque, un paysage, un site, une ville, un monument ou tout objet de longueur quelconque avec une continuité ainsi parfaite que dans la réalité.

Un mode particulier de réalisation de l'invention sera décrit ci-après, à titre indicatif et nullement limitatif, en référence au dessin annexé, sur lequel :

Les figures 1 et 2 représentent chacune trois images lumineuses à petite échelle et un support photosensible impressionné, conformément à l'invention, par ces images lumineuses.

La figure 3 est un schéma représentant les éléments essentiels utilisés pour le procédé de l'invention.

La figure 4 est un schéma indiquant les grandeurs prises en considération pour le calcul de la position des volets.

Les figures 5a et 5b sont des graphiques illustrant deux types d'aberration qu'il convient d'éviter dans la mise en oeuvre de l'invention.

La figure 6 est un diagramme donnant une représentation schématique de la courbe de réponse de l'oeil humain à une excitation lumineuse.

Les figures 7a et 7b sont des diagrammes représentant la réponse de l'oeil humain aux différentes luminances de deux images projetées sur l'écran.

La figure 8 est un schéma d'un appareil de prise de vues utilisable pour l'invention.

La figure 9 est une vue schématique en perspective d'un banc et d'un projecteur utilisable pour l'invention.

La présente invention concerne l'impression d'un support photosensible continu 1 dont deux plages A et B ont été successivement et respectivement exposées à l'action de deux images lumineuses primaires désignées par a et b. Cette exposition, dont résulte l'impression des plages A et B, est effectuée au moyen d'un appareil de prise de vues et est évidemment suivie d'un traitement ultérieur du support, notamment d'une révélation et d'une fixation, dont il ne sera plus fait mention par la suite, en raison du caractère classique de ce traitement.

La répartition des intensités lumineuses des images a et b confère à chacune de ces dernières un certain ensemble d'éléments sémantiques (c'est-à-dire que ces images sont porteuses chacune d'un ensemble d'éléments ayant une signification propre et définie), cet ensemble d'éléments sémantiques étant transféré, par impression, sur le support photosensible, et plus précisément sur ses plages A et B.

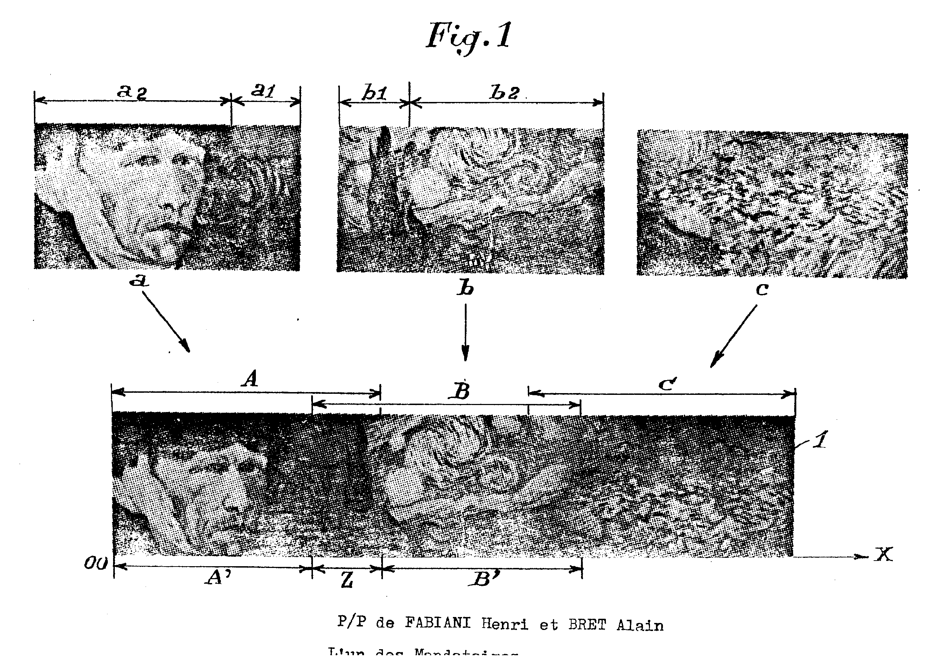

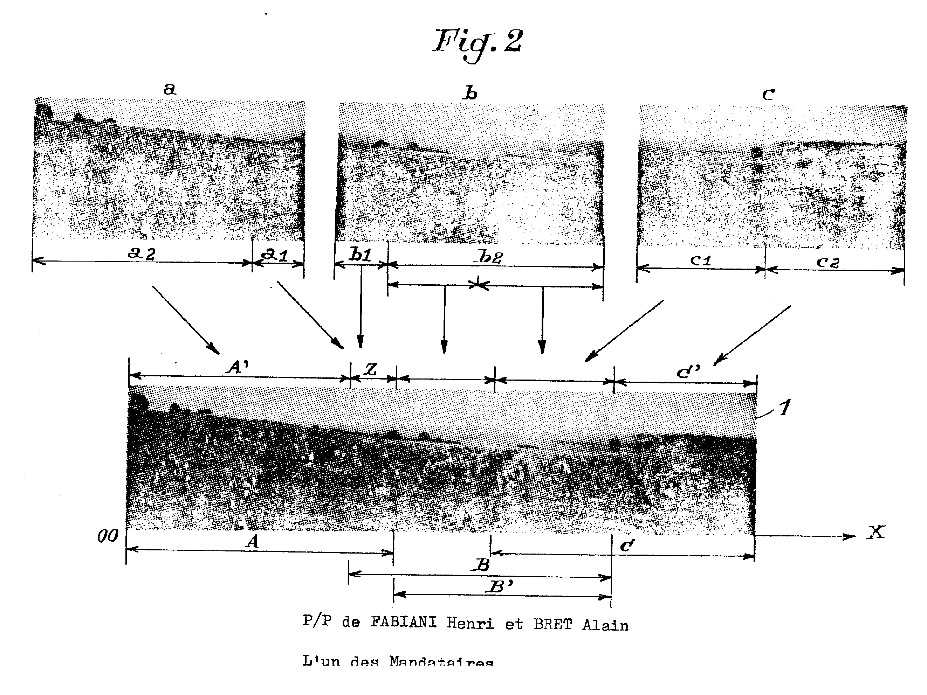

Pour des raisons de simplicité, la disposition relative des images a et b et du support 1 ne tient pas compte, sur les figures 1 et 2, du renversement d'image provoqué par l'objectif de l'appareil de prise de vues.

Selon l'invention, les plages A et B se chevauchent sur une zone de transition Z intermédiaire entre deux portions de surface A' et B'. Alors que la zone de transition Z a été successivement exposée à une première partie $a_1$, $b_1$ de chacune des images a, b, les portions de surface A' et B' n'ont subi une exposition, de la part des images $\underline{a}$ et $\underline{b}$, que de leur seconde partie respectivement $a_2$ et $b_2$. Dans la zone de transition Z, l'impression des éléments sémantiques portés par chaque plage A, B l'estompe progressivement, de chaque portion de surface A', B' vers l'autre B', A', et l'impression résultante est homogène à celle de ces portions de surface A' et B', de sorte que la zone de transition Z réalise un fondu, sur le support 1 lui-même, entre les ensembles d'éléments sémantiques portés par chacune des portions de surface A' et B'. C'est ainsi par exemple que l'on peut voir, sur la figure 1, que l'impression, sur le support 1, de la fumée produite par la pipe, rattaché au sens sémantique du terme à l'image $\underline{a}$, s'estompe vers la droite, en direction de la portion de surface B' et que l'impression de la queue de la volute lumineuse et de l'arbre, rattachés au sens sémantique du terme à l'image $\underline{b}$, s'estompe vers la gauche, en direction de la portion de surface A'.

La figure 2 représente un cas particulier de support photosensible dont l'impression présente les caractéristiques évoquées en référence à la figure 1. On peut voir, sur la figure 2, représentant un vignoble, que les éléments sémantiques (rangs de vigne) de la première partie $a_1$ de la première image lumineuse $\underline{a}$ sont strictement identiques à ceux de la première partie $b_1$ de la seconde image lumineuse $\underline{b}$. Il existe donc une continuité sémantique de $a_2$ à $b_2$ par l'intermédiaire de $a_1$ identique à $b_1$, cette continuité sémantique caractérisant le support 1 impressionné, qui porte ainsi une image continue dont la longueur (direction horizontale) est supérieure à celle de chacune des plages d'exposition A et B.

Bien qu'il n'ait été fait référence, jusqu'à présent, qu'à deux images lumineuses $\underline{a}$ et $\underline{b}$ et à deux plages A et B du support photosensible 1, la représentation sur les figures 1 et 2, de trois images lumineuses $\underline{a}$, $\underline{b}$ et $\underline{c}$, reproduites en fondu sur le support 1, fait clairement ressortir que le nombre d'enchaînements d'images n'est pas limité.

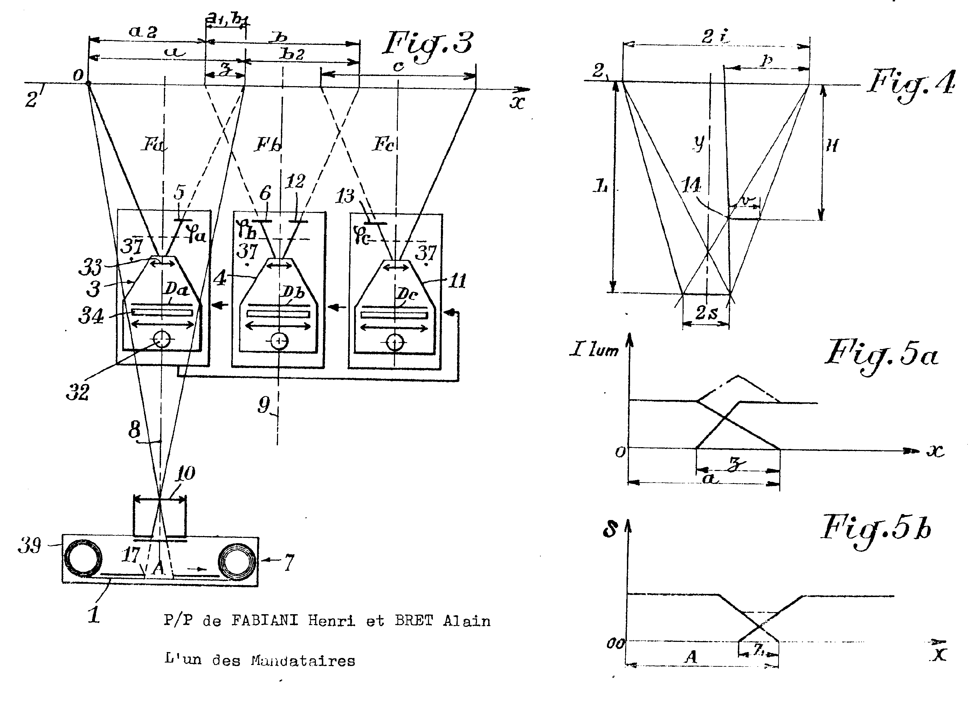

Le procédé permettant d'obtenir les caractéristiques précédemment définies et concernant l'impression du support photosensible 1 est décrit en référence à la figure 3.

On forme tout d'abord, sur un écran 2, les images lumineuses $\underline{a}$, $\underline{b}$, par projection de diapositives $D_a$, $D_b$ au moyen de projecteurs 3,4, de manière que ces images lumineuses $\underline{a}$, $\underline{b}$ se chevauchent dans une zone $\underline{z}$ de superposition de luminosité, c'est-à-dire une zone dans laquelle les intensités lumineuses des premières parties $a_1$ et $b_1$ de ces images s'additionnent.

Puis on place sur le bord des faisceaux $F_a$ et $F_b$, porteurs des images $\underline{a}$ et $\underline{b}$, des volets 5, 6 de préférence totalement opaques, de manière à diminuer l'intensité lumineuse de chacune des images $\underline{a}$ et $\underline{b}$ dans la zone de superposition $\underline{z}$. La présence de volets sur le bord des faisceaux lumineux provoque sur l'écran des pénombres croisées déterminant des diminutions progressives d'intensité lumineuse, et pour une position adéquate des volets 5 et 6, ces pénombres croisées s'opposent au déséquilibre d'intensité lumineuse de la zone de superposition $\underline{z}$, résultant de la superposition des faisceaux $F_a$ et $F_b$, de sorte que l'oeil de l'opérateur perçoit un fondu parfait des images $\underline{a}$ et $\underline{b}$ dans cette zone $\underline{z}$. Bien que les dimensions et l'emplacement des volets 5, 6 puissent être évalués

par les équations présentées ci-dessous en référence à la figure 4, l'expérience montre que les dimensions des volets ne sont pas critiques et que leur position doit être déterminée en fonction de l'effet visible qu'il en résulte sur l'écran.

Lorsque le fondu des images lumineuses $\underline{a}$ et $\underline{b}$ est réalisé, on coupe le faisceau $F_b$ et, sans modifier la position des volets, on utilise l'image lumineuse $\underline{a}$ pour impressionner la plage A du support photosensible 1. A cette fin, le support photosensible est évidemment chargé dans un appareil de prise de vues 7 dont l'axe 8 est mis en coïncidence avec celui de l'image $\underline{a}$.

Puis on coupe le faisceau $F_a$ et on rétablit le faisceau $F_b$, sans modifier la position du volet 6. On amène alors sur un même axe 9 l'appareil de prise de vues 7 et la seconde image lumineuse $\underline{b}$. Les expressions "le même axe 8" et "le même axe 9" doivent être comprises au sens large et se référant uniquement à la représentation bidimensionnelle de la figure 3. En fait, si les projecteurs sont situés du même côté de l'écran 2 que l'appareil 7, comme c'est la cas sur la figure 3, l'axe de l'image lumineuse à photographier et l'axe de l'appareil 7 ont la même trace 8 mais ne sont pas confondus dans l'espace. En outre, bien que l'axe 9 ait été représenté, pour des raisons de simplicité, comme celui de l'image $\underline{b}$ et bien que l'on puisse effectivement déplacer l'appareil de prise de vues 7 en laissant fixe le projecteur 4, on comprend aisément qu'il est préférable, en raison notamment des problèmes d'encombrement qu'on rencontrerait dans la réalisation d'un enchaîné de nombreuses images, de laisser fixe l'appareil de prise de vues 7 et de déplacer le projecteur 4. Il convient toutefois de souligner que cette opération doit être effectuée

0001958

sans aucune modification de la position du volet 6 par rapport au faisceau $F_b$, c'est-à-dire par rapport au projecteur 4.

Puis on déplace, à l'intérieur de l'appareil de prise de vues 7, le support photosensible 1 de manière à amener la plage B du support en face de la fenêtre d'exposition 17 de l'appareil de prise de vues 7. On procède alors, par déclenchement de l'appareil 7 et à travers l'objectif 10 de ce dernier, à l'impression, par l'image lumineuse $\underline{b}$, de la plage B du support 1 comme on l'a fait précédemment pour la plage A.

Ainsi que le montre la figure 3, un troisième projecteur 11 et des volets 12, 13 pouvaient être utilisés pour réaliser, avant l'impression de la plage B et par exemple au moment de la réalisation du fondu entre les images lumineuses $\underline{a}$ et $\underline{b}$, un fondu entre les images $\underline{b}$ et $\underline{c}$.

L'impression successive du support 1 par les images $\underline{a}$, $\underline{b}$ et $\underline{c}$ sans modification de la position des volets 5, 6, 12, 13 a l'effet représenté sur les figures 1 et 2. On comprend aisément qu'après l'impression du support 1 par l'image $\underline{b}$ et avant son impression par l'image $\underline{c}$, il était possible de recycler le projecteur 3, éventuellement chargé d'une autre diapositive $D_d$, d'interposer des volets respectivement sur la droite du faisceau $F_c$ et sur la gauche du faisceau $F_d$, correspondant à la projection de la diapositive $D_d$, afin de réaliser sur l'écran un fondu entre les images $\underline{c}$ et $\underline{d}$ et d'impressionner successivement le support 1 par les images $\underline{c}$ et $\underline{d}$ pour obtenir quatre images fondues sur le support 1, le processus décrit pouvant être étendu de façon illimitée par recyclage des projecteurs ou, bien que de façon beaucoup moins sûre, par transfert des diapositives et des positions des volets d'un projecteur à l'autre.

0001958

La figure 4 est un schéma représentant par $2i$ la largeur d'une image projetée sur l'écran 2 au moyen d'une source lumineuse réelle de largeur $2s$. Un volet de longueur $v$ est placé sur le faisceau de projection et produit sur l'image une pénombre de longueur $p$ ; la source et l'écran sont séparés par une distance $L$ ; le volet est parallèle à l'écran et son extrémité 14 est à une distance $H$ de l'écran.

On peut montrer que pour produire une pénombre de longueur $p$, il faut disposer le volet de manière que :

$H = \dfrac{L.p}{2s + p}$ , le volet devant alors avoir une longueur minimale $v = \dfrac{2s.p}{2s + p}$ , et la distance entre l'extrémité 14 du volet et l'axe $y$ du système optique devant avoir la valeur $\dfrac{s(2i - p}{2s + p}$.

La plus grande pénombre envisageable ayant la longueur $2i$, la longueur minimale que doit avoir le volet pour former cette pénombre est $\dfrac{2i.s}{i + s}$ . Comme il est évidemment commode de n'avoir qu'un type de volet pour réaliser toutes les pénombres souhaitées, il est préférable de donner à tous les volets utilisés une longueur égale ou supérieure à $\dfrac{2i.s}{i + s}$ .

Les résultats précédents permettent de déterminer la longueur à donner aux volets et fournissent une estimation de leur position.

Toutefois, ils ne peuvent adéquatement remplacer l'examen visuel du fondu, réalisé sur l'écran, entre deux images lumineuses.

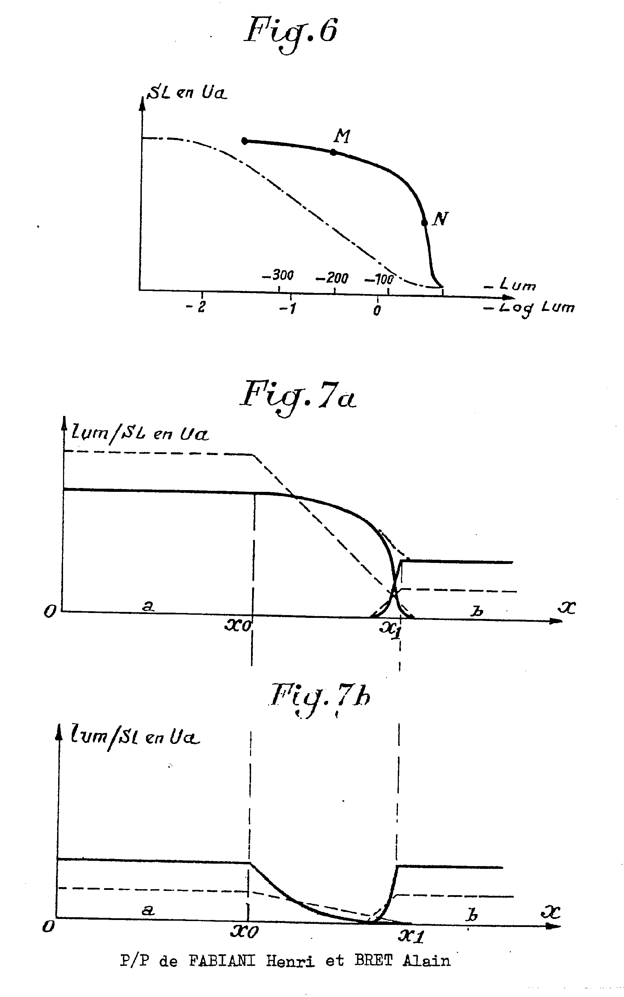

Il apparaît en effet que toute erreur dans la longueur des pénombres croisées réalisant le fondu se traduit sur l'écran par un accident lumineux observable. Ce phénomène est mis en évidence sur le graphique de la figure 5a qui porte en abscisse la distance $x$ séparant un point courant de l'écran d'un point de

0001958

référence 0 (voir figure 3) et en ordonnée l'intensité lumineuse moyenne I lum des images a et b projetées sur l'écran. L'intensité lumineuse résultante, indiquée en trait mixte, présente un maximum qui altère le fondu.

Le graphique de la figure 5b met en évidence un autre type d'accident, apparaissant cette fois sur le support. Ce graphique porte en abscisse la distance X séparant un point courant du support photosensible 1 d'un point de référence 00 et en ordonnée la densité optique $\delta$ des plages A et B après révélation du support photosensible négatif. On constate dans la zone de transition Z un accident de la résultante des densités, figurant en trait mixte, provenant d'une erreur de déplacement du support photosensible dans l'appareil de prise de vues entre l'impression des plages A et B. Si l'on appelle rapport de reproduction de l'appareil 7 le rapport de la longueur de la plage A à celle de l'image lumineuse a, et si les images a et b ont la même longueur, on comprend aisément que la translation que l'on doit faire subir, dans l'appareil 7, au support 1, entre les impressions de a et de b, a pour module une longueur égale au produit, par le rapport de reproduction, de la différence entre les longueurs de l'image a et de la zone de superposition z, cette translation ayant une direction inverse de celle du mouvement relatif du projecteur 4 par rapport à l'appareil 7 en raison du renversement de l'image par l'objectif 10. Toutefois, l'expérience a montré que la précision de cette translation devait être élevée, afin d'éviter les accidents tels que ceux de la figure 5b.

Le procédé décrit précédemment ne fait référence, pour l'obtention de fondus entre les images lumineuses, qu'à l'observation visuelle directe de

ces images. Tel que décrit jusqu'à présent, ce procédé permet effectivement dans de nombreux cas, d'obtenir sur le support des fondus parfaits, semblables à ceux des figures 1 et 2. Cependant ce procédé s'est avéré parfois conduire à des aberrations, plus particulièrement lorsque les images lumineuses présentaient des intensités lumineuses sensiblement différentes. L'explication du phénomène parasite sous-jacent et les moyens de le pallier sont exposés ci-dessous.

La figure 6 est un graphique très schématique portant en ordonnées une sensation lumineuse SL, exprimée en unités arbitraires $U_a$ et représentant l'intensité de la réponse de l'oeil d'un observateur à une image lumineuse, et en abscisse d'une part une échelle donnant l'opposé du logarithme de la luminance de cette image (- Log lum), à laquelle correspond la courbe en trait mixte, et d'autre part une échelle donnant directement l'opposé de la luminance de cette image -(lum), à laquelle correspond la courbe en trait plein. La figure 6 n'a pas d'autre but que de traduire le fait que l'oeil tend à assimiler entre elles des plages de luminances différentes, lorsqu' elles sont soit très fortement, soit très faiblement éclairées, c'est-à-dire que l'oeil atténue le contraste d'un sujet fortement ou faiblement éclairé.

La figure 7a est un graphique portant en abscisse la distance x (figure 3) et en ordonnée d'une part la luminance lum (courbe en pointillés), d'autre part la sensation lumineuse $S_L$ (courbe en trait plein), exprimées chacune en unité arbitraire $U_a$ et relatives à deux images lumineuses a et b projetées sur l'écran, de luminances sensiblement différentes. Cette figure correspond à l'obtention d'un fondu visuel parfait, comme en témoigne la résultante de sensation lumineuse figurée en trait mixte. Les sensations lumi-

neuses aux points $x_0$ et $x_1$ correspondent par exemple à celles des points M et N de la figure 6, $x_0$ marquant le début de la pénombre de l'image $\underline{a}$ et $x_1$ le point où la luminance de la pénombre a atteint la luminance de l'image $\underline{b}$.

Si un filtre gris neutre $\omega_a$ est placé sur le trajet du faisceau $F_a$ de manière à ajuster la luminance de $\underline{a}$ sur celle de $\underline{b}$, la sensation lumineuse au point $x_0$ deviendra celle qui caractérisait le point N et les variations de luminance et de sensation lumineuse en fonction de $\underline{x}$ seront celles représentées sur la figure 7b dont l'examen fait aisément comprendre que le fondu visuel entre les images $\underline{a}$ et $\underline{b}$ est détruit.

Or, on sait que les supports photosensibles ont une courbe de réponse, exprimée en densités optiques (ordonnée) en fonction de l'opposé du logarithme des quantités d'éclairement ou luminations reçues par le support (en abscisse), du type représenté sur la figure 6 en trait mixte.

Si, par conséquent, l'opérateur ayant réalisé le fondu visuel représenté sur la figure 7$\underline{a}$ veut obtenir, sur le support photosensible, deux plages A et B de densité optique moyenne voisine, ce qu'il réalise par exemple en réduisant le temps d'exposition de la plage A par rapport à celui de la plage B, il se produira sur le support 1 une aberration semblable à celle qui est représentée sur la figure 7$\underline{b}$.

Cette aberration peut, selon l'invention, être évitée en simulant plus strictement encore, au moyen des phénomènes visuels intervenant dans l'observation d'un fondu entre deux images lumineuses, les phénomènes physico-chimiques intervenant sur le support photosensible au moment de son impression par ces images.

0001958

Cette plus grande rigueur dans la simulation implique nécessairement, avant la réalisation du fondu, l'égalisation des luminances des images lumineuses dont on veut obtenir une impression de même valeur lumineuse moyenne sur le support photosensible, et suggère l'emploi d'un filtre de contraste, au travers duquel l'opérateur observe le fondu entre les images lumineuses, et dont les caractéristiques optiques sont adaptées, de façon connue en soi, aux caractéristiques du type de support photosensible utilisé, de manière à rendre très voisines les courbes de réponse de l'oeil humain d'une part et du support photosensible d'autre part.

L'expérience a montré que ce procédé donnait d'excellents résultats notamment avec des pellicules photosensibles dites "douces", c'est-à-dire dont la pente de la partie rectiligne de la courbe de réponse (densités optiques en fonction du logarithme des luminations), dénommée également courbe de gamma ($\gamma$), est inférieur ou égale à 1.

Dans sa forme de réalisation la plus élaborée, exposée ci-dessous, le procédé de l'invention élimine donc ce type d'aberration.

Supposons que l'on veuille reproduire sur un support photosensible, avec une même valeur lumineuse et avec un effet de fondu entre chaque image, les images portées par $n$ dispositives différentes. Il convient tout d'abord de déterminer, par une mesure de luminance connue en soi, la luminance de chaque image lumineuse provenant de la projection de chaque diapositive sur l'écran 2. On en déduit, de façon également connue, la densité du filtre neutre à interposer sur le faisceau de chaque image pour que les $n$ images lumineuses aient la même luminance, par exemple celle de l'image ayant la plus faible luminance.

On met alors en oeuvre le procédé précédemment décrit en référence à la figure 3 en réalisant sur l'écran les deux fondus entre les trois premières images lumineuses a, b, c ramenées à la même luminance au moyen des filtres neutres $\varphi_a$, $\varphi_b$, $\varphi_c$ interposés sur leur faisceau de projection $F_a$, $F_b$, $F_c$ respectif, ces fondus étant très préférablement observés à travers le filtre de contraste précédemment mentionné.

Il est possible ensuite d'impressionner successivement les différentes plages du support 1 comme indiqué précédemment, soit en laissant en place les filtres neutres et en conservant les mêmes valeurs de temps de pose et de diaphragme pour l'appareil de prise de vues 7, soit en retirant les filtres après l'obtention des fondus visuels et en réduisant les temps de pose ou le diaphragme comme une fonction croissante de la densité optique des filtres retirés, de manière à garder constantes les luminations moyennes des différents clichés.

La réalisation des fondus intervenant après l'égalisation des luminances, il ne faut pas oublier que les pénombres formées ont elles-mêmes une influence sur ces luminances. Il convient donc, notamment si on utilise des pénombres très allongées, de vérifier également a posteriori l'homogénéité des luminances des images. En raison de l'influence d'une image sur l'autre, il est également préférable de réaliser des fondus sur trois images lumineuses, une quatrième image pouvant même parfois être souhaitable.

Un appareil de prise de vues utilisables pour l'invention doit pouvoir permettre des déplacements du support photosensible sur une longueur inférieure à celle d'une plage d'exposition A, avec une précision d'au moins 1/10 de millimètre.

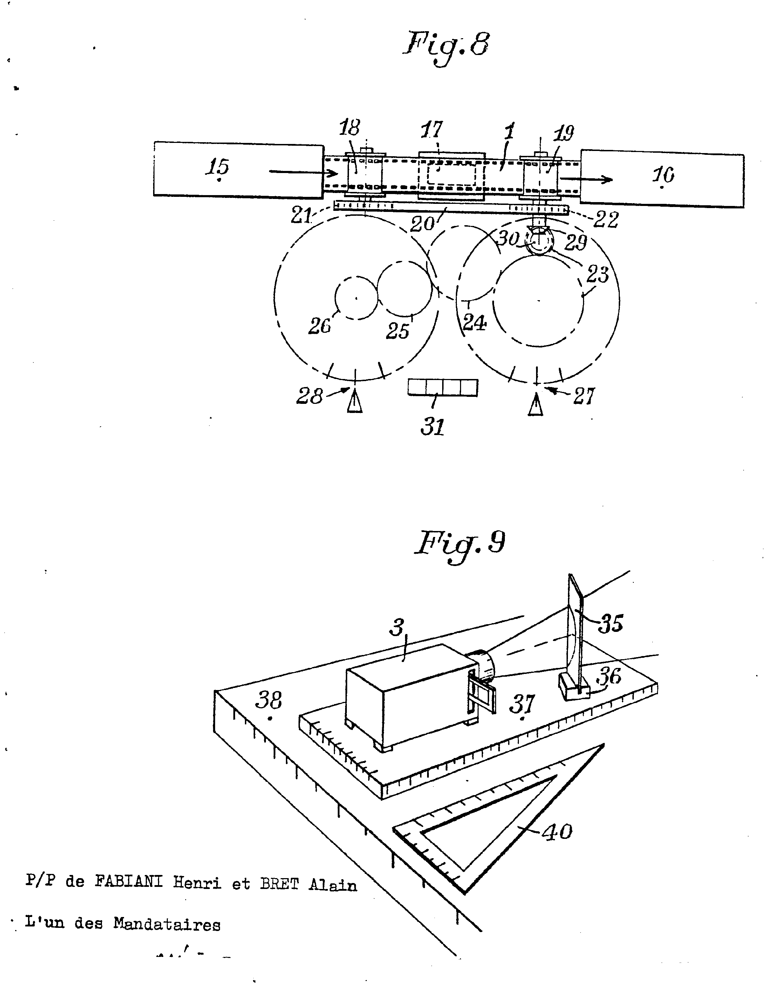

L'appareil de prise de vues 7 est donc un appareil photographique doté, outre d'organes classiques représentés ou non (figure 8), tels qu'un boîtier 39 et un objectif 10 (figure 3), un magasin débiteur 15 et un magasin récepteur 16, une fenêtre d'exposition 17, et des tambours d'entraînement 18, 19, d'organes supplémentaires tels qu'une courroie crantée 20 en prise sur des poulies 21, 22 solidaires des axes des tambours, un engrenage de déplacement centimétrique et millimétrique 23 et des engrenages de déplacement déci- et centi-millimétrique 24 à 26 associés à des cadrans 27, 28, ces engrenages étant en prise avec un pignon 29 solidaire de l'axe du tambour 19. De préférence, un système de verrouillage électromagnétique 30 est prévu pour bloquer l'ensemble des engrenages dans toute position sélectionnée.

Le support photosensible 1 est tendu par un effet de couple, obtenu par tout moyen adéquat, exercé sur les bobines d'enroulement (non visibles) à l'inté- rieur des magasins 15, 16. Contrairement aux appareils photographiques classiques, l'appareil 7 de l'invention permet un déplacement inverse du support, le magasin débiteur devenant récepteur et inversement. Un compteur totalisateur 31 est prévu pour permettre un repérage constant et univoque de toute plage du support 1.

L'appareil de prise de vues est calé dans une position fixe par rapport à l'écran (figure 3).

Les projecteurs utilisés pour l'invention sont des projecteurs du commerce, d'excellentes qualités optiques toutefois, dans lesquels on a inséré, entre la lampe 32 et l'objectif 33 (figure 3) une lame 34 de verre dépoli ou tout autre élément optique faisant office de diffuseur et permettant d'obtenir des pénom- bres exemptes de toute frange de diffraction ainsi qu'un abaissement de contraste de l'image projetée sur l'écran.

0001958

Les volets 5, 6, 12, 13 sont par exemple constitués par des lames métalliques rectangulaires 35, montées verticales sur un socle 36.

Chaque projecteur est calé sur une platine 37, toutes les platines ayant les mêmes dimensions, portant des repères pour leur mise en place, au moyen d'une équerre 40 par exemple, et étant susceptibles à volonté d'être déplacées sur billes ou d'être bloquées par verrouillage électromagnétique sur un banc 38. Les volets associés à chaque projecteur sont également susceptibles d'être déplacés et calés sur la platine respective. A cette fin, on prévoit par exemple que la surface supérieure des platines et les socles 36 des volets s'attirent par aimantation.

Le passage d'une image lumineuse à l'autre est ainsi obtenu par simple déplacement des platines 37 sur le banc 38. On élimine de la sorte les conséquences fâcheuses d'éventuelles différences de construction des projecteurs, de mise en place des diapositives, d'éclairement des lampes, de positions relatives des volets, etc...

L'invention est applicable dans tous les cas où l'image s'impose comme vecteur d'information, de formation, de publicité, de spectacle, de décoration fixe ou mobile, architecturale ou scénique, ou enfin pour servir de fond dans une prise de vues cinématographiques. Puisqu'une faible longueur de pellicule suffit pour véhiculer un grand nombre d'images qui, associées entre elles, peuvent restituer une leçon, un raisonnement, une description, ou tout récit, l'invention permet la diffusion d'informations dans les domaines les plus variés et à faible prix de revient. Cet avantage est renforcé par le fait qu'un support photosensible impressionné conformément à l'invention peut être lu directement au moyen d'une loupe ou d'une

18

0001958

visionneuse à loupe.

Il est du reste bien entendu que le mode de réalisation décrit ci-dessus a été donné à titre d'exemple et que des modifications accessibles à l'homme de l'art peuvent y être apportées sans sortir du cadre de la présente invention.

DIX-HUIT PAGES.          P/P de FABIANI Henri et BRET Alain

L'un des Mandataires

0001958

REVENDICATIONS DE BREVET

1.- Procédé pour former, sur un support photosensible et par une action successive et respective de deux images lumineuses primaires sur deux plages chevauchantes et non confondues, de ce support, une image secondaire porteuse de deux ensembles d'éléments sémantiques qui lui sont transmis, par impression, par les deux images lumineuses primaires, cette image secondaire présentant une zone de transition réalisant sur le support lui-même un fondu entre les deux ensembles d'éléments sémantiques, comprenant les phases consistant à former les première et seconde images lumineuses primaires par projection, sur un écran, de deux faisceaux lumineux porteurs respectivement du premier et du second ensemble d'éléments sémantiques, ces images lumineuses se chevauchant sur l'écran dans une zone de superposition de luminosité, et à diminuer la luminosité de chacune des images lumineuses primaires dans la zone de superposition, par interposition de volets sur le trajet des deux faisceaux lumineux jusqu'à obtenir, sur l'écran, un fondu des deux images lumineuses primaires dans la zone de superposition de luminosité, caractérisé en ce qu'il comprend les phases consécutives consistant à :

- couper le second faisceau lumineux $F_b$ et disposer sur un même axe 8 un appareil de prise de vues 7 chargé dudit support photosensible 1 et la première image lumineuse primaire $\underline{a}$,
- prendre une photographie de cette première image au moyen de cet appareil et sur ce support,
- rétablir le second faisceau lumineux $F_b$ et couper le premier faisceau $F_a$,
- amener sur un même axe 9 l'appareil de prise de vues 7 et la seconde image lumineuse primaire $\underline{b}$

par déplacement relatif, et déplacer le support photosensible 1, à l'intérieur de l'appareil de prise de vues 7, d'une longueur liée audit déplacement relatif par une relation prédéterminée, et

- prendre une photographie de la seconde image lumineuse au moyen de cet appareil et sur ce support.

2.- Procédé suivant la revendication 1, caractérisé en ce que les phases consistant à réaliser les deux images lumineuses primaires et à diminuer leur luminosité dans la zone de superposition sont séparées par une phase intermédiaire consistant à égaliser les luminances des images lumineuses $a$, $b$ et à équilibrer ces images, l'une par rapport à l'autre, sur le plan colorimétrique.

3.- Procédé suivant la revendication 1 ou 2, caractérisé en ce que lesdits volets sont opaques.

4.- Système matériel pour réaliser un fondu d'images directement sur un support photosensible continu, comprenant un écran 2, au moins deux projecteurs 3, 4, au moins trois volets opaques 5, 6, 12, et un appareil de prise de vues 7 dans lequel ledit support photosensible 1 est chargé, cet appareil de prise de vues comportant des moyens 18 - 29 permettant un déplacement du support photosensible de toute longueur choisie, même différente de celle d'une plage d'exposition A.

5.- Système matériel suivant la revendication 4, caractérisé en ce que les moyens 18 - 29 permettant un déplacement du support photosensible permettent un tel déplacement suivant un sens de défilement quelconque de ce support.

6.- Système suivant la revendication 4 ou 5, caractérisé en ce que ledit déplacement est mesuré avec une précision d'au moins 1/10 de millimètre.

7.- Système suivant l'une quelconque des revendications 4 à 6, caractérisé en ce que chaque projecteur 3, 4, 11, est calé sur une platine 37 sur laquelle sont également calés le ou les volets 5, 6, 12, 13 associés à chaque projecteur, ces platines pouvant se déplacer sur un même banc 38 sans qu'aucune modification de la position de chaque volet dans le faisceau du projecteur n'apparaisse.

8.- Système suivant l'une quelconque des revendications 4 à 7, caractérisé en ce qu'une lame de verre dépoli 34, jouant le rôle de diffuseur, est insérée dans chaque projecteur.

9.- Application d'un support photosensible à la représentation continue d'un objet, sur une longueur supérieure à celle d'une plage d'exposition d'un appareil de prise de vues.

TROIS PAGES.                    P/P de FABIANI Henri et BRET Alain

                    L'un des Mandataires

# Fig.1

## Fig.2

P/P de FABIANI Henri et BRET Alain

L'un des Mandataires

Fig.3

Fig.4

Fig.5a

Fig.5b

P/P de FABIANI Henri et BRET Alain

L'un des Mandataires

0001958

## Fig.6

## Fig.7a

## Fig.7b

P/P de FABIANI Henri et BRET Alain

## Fig.8

## Fig.9

P/P de FABIANI Henri et BRET Alain

L'un des Mandataires

## DOCUMENTS CONSIDERES COMME PERTINENTS

| Catégorie | Citation du document avec indication, en cas de beso...  des parties pertinentes | Revendication concernée |
|---|---|---|
| | US - A - 1 808 352 (H.J. HOLLEN) <br> * Page 1, lignes 4-24; les figures; page 1, ligne 48 - page 2, ligne 39; page 2, lignes 83-119 * <br><br> --- | 1 à 5 |
| | FR - A - 1 465 646 (M. SEREN) <br> * Les figures; page 2, colonne de gauche, lignes 13-32 * <br><br> --- | 1 |
| A | FR - A - 1 249 771 (INSTITUT DES RECHERCHES DE CINEMATOGRAPHIE ET PHOTOGRAPHIE DE L'U.R.S.S.) | 1 |
| A | US - A - 3 024 694 (E. SHUFTAN) <br><br> ---- | 1 |

**CLASSEMENT DE LA DEMANDE (Int. Cl.²)**

G 03 C 5/08
G 03 B 37/04

**DOMAINES TECHNIQUES RECHERCHES (Int. Cl.²)**

G 03 C 5/08
G 03 B 37/04

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-01-1979 | RASSCHAERT |

OEB Form 1503.1  06.78